# EUROPEAN PATENT APPLICATION

(11) **EP 4 002 629 A1**
(43) Date of publication of application: **25.05.2022**
(21) Application number: 20208660.9
(22) Date of filing: 19.11.2020
(51) Int. Cl.: H02J 3/14, H02J 3/38, H02J 9/06

(54) **METHOD FOR STABILISING ISLAND MODE IN AN ENERGY HUB**

(71) Applicant: Ørsted Wind Power A/S, 7000 Fredericia (DK)
(72) Inventor: Johnson, Howard Philip, London, SW1P 1WG (GB); Kocewiak, Lukasz, 2820 Gentofte (DK); Bendixen, Jacob, 2820 Gentofte (DK)
(74) Representative: AWA Denmark A/S

(57) **Abstract**

The method comprises the steps of: Providing an energy hub (3) having an electrical infrastructure (6, 7, 8, 19). Providing a number of generators (4) of electrical energy and a plurality of consumers (10, 13, 14, 15, 17) of electrical energy connectable to and disconnectable from said electrical infrastructure. The plurality of consumers (10, 13, 14, 15, 17) comprising at least one critical consumer (17) of electrical energy and at least one non-critical consumer (13, 14, 15) of electrical energy. Disconnecting the energy hub (3) from the grid. Supplying said electrical infrastructure (6, 7, 8, 19) with electrical energy from at least some generators (4) among said number of said generators (4) of electrical energy. Using said electrical energy by means of at least some consumers of said plurality of consumers (13, 14, 15, 17) Monitoring at least voltage and frequency of said electrical energy in said electrical infrastructure (6, 7, 8, 19). Selectively disconnecting and/or reconnecting one or more of said non-critical consumers (13, 14, 15) of electrical energy.

## Description

The present invention relates to energy hubs, in particular the start-up and operation of energy hubs, such as wind farms, in island mode.

An energy hub can be defined as a location where the production, conversion, storage and possibly consumption of different energy carriers takes place. This could include sunlight as an energy carrier being converted into electricity by photovoltaic converters, i.e. a solar farm. It could include wind being converted into electricity by wind turbine generators. It could also include the conversion of the electricity produced into another energy carrier. The latter could include electrolytical splitting of seawater into H₂ and O₂, production of NH₃, other chemical storage such as in batteries. All of these may exist in combination with each other as well as with similar production, conversion and storage technology that need not be detailed here.

In recent years there has been an increased focus on green energy, i.e. energy provided by sustainable sources such as wind and solar power plants, which as opposed to the burning of fossil fuels, can be regarded as CO₂ neutral, because the energy production as such does not emit any CO₂.

With the increased implementation of such sustainable sources such as solar farms and wind farms for providing electricity for the power grid, there will be less conventional electricity production from thermal power plants using coal, oil or natural gas. There is therefore, e.g. as disclosed in EP3471231A, incorporated herein by reference, a desire to use wind farms, in particular offshore wind farms, for providing black-start capability, i.e. the capability to power up and reestablish normal operation of a powerless electrical grid.

As explained in EP3471231A the use of a wind farm for black-starting an electrical grid involves a phase after start-up of the wind turbine generators and energization of offshore electrical infrastructure where the wind farm is operated in island mode to ensure that it is sufficiently stable before it is reconnected to the grid. Stable island mode i.e. where the voltage and frequency of the AC are kept within nominal limits is notoriously difficult to maintain, be it on an actual small island, on a wind farm, or elsewhere where electricity generators and electricity consumers do not have the back-up of the grid to stabilize wind turbines and other grid-connected converters as well as compensate for fluctuations in consumption or production. That is to say, in island mode production and consumption must match each other closely, to keep voltage and frequency of the AC within nominal limits. Furthermore, active components such as electricity generators may provide negative damping and provide oscillations of other frequencies than the fundamental frequency, e.g. around 400 Hz to 700 Hz but in some cases up to 3 kHz, all of which is not acceptable. There will always be some inherent damping from the resistive composant of the passive components such as transformers and cables, but naturally in an islanded system these are small compared to the grid, as cables are short and numbers of transformers are limited. This evidently, as to be so as under normal production such resistive composants represent pure losses that are to be avoided.

Energy hubs in island mode, however, differ from an actual island in conventional island mode or isolated power systems. In conventional networks including islands the energy provider controls the production and tries to match the consumption which varies because consumers are switched on and off by third parties outside of the control of the energy provider. The main purpose of an energy hub is to provide in-house load as well as energy to the grid and consequently the fluctuation in consumer demand that can be tolerated is limited if the energy hub is in island mode. Moreover, the energy provider, i.e. the operator of the energy hub is not in full control of the production because wind driving the wind turbine generators or the sunshine irradiating the photovoltaic panels are not constant. Also, with increasing sizes of energy islands in terms of generation units, the risk or tendency of the above-mentioned oscillations increase, because the more independent units there are in the more chaotic the system becomes, and therefore more prone to oscillations.

Recently, however, there have been suggestions to deploy controllable consumers in conjunction with energy hubs in order to utilize surplus production of electrical energy not needed by the general consumers on the grid. These controllable consumers would have low tariffs for the electricity consumed to reflect the value of the flexibility they provide. Such controllable consumes may include the chargers for battery storage and electrolytic separators for splitting seawater into hydrogen and oxygen.

On this background it is the object of the present invention to improve the black-start capability of an energy hub, in particular an offshore wind hub, by improving the stability of the island mode before reconnection to the powerless grid.

According to the invention this object is achieved by a method for stabilising island mode in an energy hub, said method comprising: providing an energy hub having an electrical infrastructure, providing a number of generators of electrical energy and a plurality of consumers of electrical energy connectable to and disconnectable from said electrical infrastructure, said plurality of consumers comprising at least one critical consumer of electrical energy and at least one non-critical consumer of electrical energy, disconnecting the energy hub from the grid to establish island mode, supplying said electrical infrastructure with electrical energy from at least some generators among said number of said generators of electrical energy, using said electrical energy by means at of least some consumers of said plurality of consumers, monitoring at least voltage and frequency of said electrical energy in said electrical infrastructure, selectively disconnecting and/or reconnecting one or more of said non-critical consumers of electrical energy, so as to maintain said voltage and frequency of said electrical energy within predetermined nominal values.

By providing consumers in conjunction with an energy hub the island itself as such becomes larger and typically more stable. However, controlling the non-critical consumers allows further stability because they may be switched on and off at will under control of the energy hub operator. They may therefore provide stabilizing load for the generators when needed in island mode and be switched off and on to provide additional damping as well as compensate for drops or variations in energy production of the generators, e.g. if the wind speed at a wind farm or the sunlight at photovoltaic farm suddenly changes. That is to say, the method may allow the advantageous utilization of the non-critical consumers for a secondary purpose in situations where their main purpose of absorbing low-value overproduction is irrelevant, e.g. in case of a grid black out. Accordingly, the introduction of unnecessary permanent resistive losses is avoided. That is to say, in such a situation focus will be on restarting the grid rather than absorbing the low-value overproduction. Instead selectively connecting and disconnection the non-critical consumer, allows the non-critical consumer to absorb short-term overproduction that might threaten the stability of the island mode. Furthermore, the selective connecting and disconnecting of the non-critical consumers allows the damping of the undesired oscillations at other frequencies than the fundamental grid frequency of normally 50 Hz or 60 Hz.

According to a preferred embodiment, said non-critical consumers comprise one or more consumers selected from the group of battery chargers, electrolytic separators, mechanical energy storage, and thermal storage. These consumers may all fulfil the dual purpose of absorption of overproduction and stabilization of island mode as the case may be.

According to a further preferred embodiment, at least some of said non-critical consumers are located offshore, this is in particular the case when, according to another preferred embodiment, the energy hub is a wind farm comprising offshore wind turbine generators.

According to yet a further preferred embodiment, a local grid is formed by at least one generator or battery energy storage system. This further aids in stabilizing the island mode.

The invention will now be described in greater detail based on nonlimiting exemplary embodiments and with reference to the drawing on which:

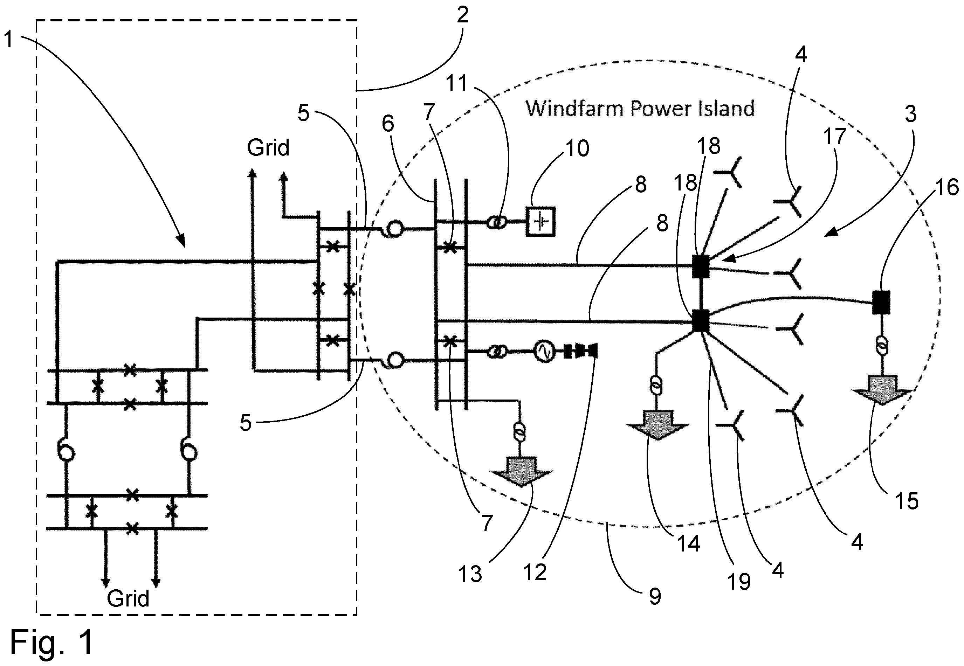

Fig. 1 schematically shows a wind farm and parts of an electricity grid.

In the following description it will be assumed that the energy hub is a wind farm, where the wind turbine generators are offshore. Much of the layout or topology of the system of Fig. 1 is quite conventional and will only briefly be described, as the essence of the present invention resides in the completely new approach to island mode operation of the wind farm.

In Fig. 1 parts of an electrical power grid 1 are schematically shown on the left-hand side in the dashed box 2.

The term electrical power grid 2 in the present application is to be understood as comprising both power distribution systems and power transmission systems. Power transmission systems are often defined as systems operated at voltages higher than 100kV, while systems operated at lower voltages such as 66kV are often named "power distribution systems". Companies operating these systems are often referred to as Transmission System Operators and Distribution System Operators, respectively. Accordingly, the wind farm connects either to a transmission system or to a distribution system.

An energy hub, exemplified by an offshore wind farm 3 with wind turbine generators 4 on the right-hand side of Fig. 1, is connected to the electrical power grid via wind farm connection points 5. The offshore wind farm 3 is connected to onshore busbars 6 and switchgear 7 via AC transmission lines 8 as described in EP3471231A. Busbars 6, AC transmission lines 8, and switchgear 7 are doubled, as shown, for redundancy in case of failure or malfunction. The wind turbine generators 4 are connected to the AC transmission lines 8 via suitable switchgear (not shown) arranged on offshore platforms 18, natural or artificial islands, or combinations thereof, in conjunction with the wind turbine generators 4. As can be seen, further elements may be connected to the busbars 6. Such further elements may comprise an energy storage 10 such as a battery connected via a converter and a transformer 11 to the busbar 6. The further elements could also comprise a STATCOM (not shown), a synchronous condenser 12 (or a generator), thermal storage (not shown), a dump load (not shown) or other consumers 13, 14, 15 such as a hydrogen electrolysis plant.

In the event of a major fault in the electrical power grid 2 the electrical grid 2 will shut down and become powerless. At the same time the energy hub 3 will be disconnected from the grid 2 and hence enter into island mode, i.e. become an electrically isolated island 9 as indicated by the dashed oval. The electrical infrastructure of the energy hub 3 comprising *inter alia* the onshore busbars 6, switchgear 7, AC transmission lines 8, and array cables 19, is thus isolated from the grid 2.

It is most unlikely that sudden isolation of the island 9 from the grid 2 will result in any stable island mode, *inter alia* because the wind turbine generators 4 are typically in a grid following mode and therefore rely on a stable external AC source for operation. The same would be the case for inverters of other generators such as photovoltaic generators of a solar farm. The entire energy hub would thus have to be shut down and restarted from scratch to achieve stable operation in island mode, in turn allowing the energy hub to serve as a black-start generator for the grid 2. All of this is explained in detail in the aforementioned EP3471231A.

Thus, using the storage 10 and the converter, the AC transmission line 8 may be energized, providing the necessary AC for synchronizing the wind turbines 4 allowing them to produce energy for the necessary control and other infrastructure to establish island mode of the island 9.

This may in particular be done by gradually increasing the voltage supplied from the storage unit 10 and converter to the AC transmission lines 8, so as to minimize transient phenomena that could occur if full nominal voltage was applied at once and could cause the system to cut off the AC power lines again.

However, establishing stabile island mode may be difficult because, being dependent on the wind conditions, the electrical energy output is not constant as well as the number of generators is increasing. As it is well-known, short term excess production of electrical energy threatening the stability, may be dissipated in dump loads. The inventors, however, have realized that with the increased presence of other consumers 13, 14, 15 apart from control and other critical infrastructure of the wind farm 3, in more or less close proximity of the wind turbine generators 4, i.e. forming part of the wind farm 3, such non-critical consumers may also be used to stabilize the island mode. Such non-critical consumers could in particular comprise those devices used for converting and storing general overproduction, i.e. excess production for which the market price is too low, as opposed to the short-term overproduction compensated by e.g. the dump loads, still providing additional damping into the energy hub. Such non-critical consumers 13, 14, 15 may include electrolytic separators for splitting seawater into hydrogen (H₂) and oxygen (O₂), with storage of the resulting hydrogen and oxygen for later use. Such non-critical consumers 13, 14, 15 may also include chargers or converters in conjunction with battery storage. Furthermore, non-critical consumers 13, 14, 15 may include thermal storage, e.g. immersion heaters in water storage tanks or molten salt storage systems. Having these non-critical consumers in practice increases the size of the island, which in itself increases stability, but more importantly provides consumers under the control of the energy hub operator. The offshore critical consumers 17 may be located on e.g. distribution platforms 18 or the like where also switchgear, control gear, and critical consumers 17, such as monitoring and control computers, forming part of the electrical infrastructure are located, or on separate offshore platforms 16 e.g. because hydrogen separation and storage may require stricter security measures than distribution platforms or specialized docking facilities for tankers. Battery storage 10 could also be regarded as a non-critical consumer in the sense that it may be seen as disconnected if it is no longer charging i.e. consuming energy. However, as will be explained below, keeping the battery and the associated converter connected and actively using them to stabilize the island may be preferred.

That is to say the operator may switch on and off these non-critical consumers at will, to compensate for fluctuations in production of electrical energy by the wind turbine generators 4 as well as to provide additional damping, thereby stabilizing and keeping voltage and frequency within nominal limits. Needless to say that this would be an essentially automated process, where at least voltage and frequency of said electrical energy in said electrical infrastructure are monitored and said one or more of said non-critical consumers of electrical energy are selectively disconnected and/or reconnected so as to maintain said voltage and frequency of said electrical energy within predetermined nominal values. This automated process of maintaining stability of the voltage and frequency, can be carried out using the control systems of the energy hub generation units and the controllable loads.

In other words, if a number of wind turbines is increased and an increase in production is detected the non-critical consumers 13, 14, 15 may one at a time or in groups be switched on to consume the increased production and to provide damping in the energy hub in island mode, and in a subsequent decrease in production they may likewise be switched off in individually or in groups. This regulation and stabilization option comes at hardly no expense to the operator, as this novel secondary purpose just adds to the main purpose of these consumers, allowing them to be used in critical island mode and black start situations, where the main purpose can be regarded as irrelevant. In this respect it could be envisaged that thermal storage with immersion heaters in water, molten salt or other heat storage could replace at least some of the dump loads, whereby surplus energy would not just be dissipated as heat into the environment.

If a hydrogen hydrolysis plant is comprised, it could even be envisaged that a synchronous generator 12 using hydrogen fuel is connected to the busbar 6 or elsewhere without deviation from the object of CO₂ neutral black start.

Still without deviating from the object of CO₂ neutral black start, it could also be envisaged that the converter for the battery storage 10 could emulate a synchronous condenser or even a powered synchronous machine allowing the battery storage not only to be passively switched on and off but form an active part of the regulation of the island mode, in particular during the start-up, improving the entire energy hub stability by providing additional damping to maintain the voltage and frequency within the normal operating range. Moreover, the use of synchronous condensers 12 (or generators) bring extra damping to avoid wind turbine disconnection due to instability as well as stabilize the frequency in case of consumer connection and disconnection.

## Claims

1. Method for stabilising island mode in an energy hub, said method comprising:
providing an energy hub having an electrical infrastructure,
providing a number of generators of electrical energy and a plurality of consumers of electrical energy connectable to and disconnectable from said electrical infrastructure, said plurality of consumers comprising at least one critical consumer of electrical energy and at least one non-critical consumer of electrical energy,
disconnecting the energy hub from the grid to establish island mode,
supplying said electrical infrastructure with electrical energy from at least some generators among said number of said generators of electrical energy,
using said electrical energy by means of at least some consumers of said plurality of consumers,
monitoring at least voltage and frequency of said electrical energy in said electrical infrastructure,
selectively disconnecting and/or reconnecting one or more of said non-critical consumers of electrical energy, so as to maintain said voltage and frequency of said electrical energy within predetermined nominal values.

2. Method according to claim 1, wherein said non-critical consumers comprise one or more consumers selected from the group of battery chargers, electrolytic separators, mechanical energy storage, and thermal storage.

3. Method according to any one of the preceding claims, wherein at least some of said non-critical consumers are located offshore.

4. Method according to any one of the preceding claims, wherein the energy hub is a wind farm comprising offshore wind turbine generators.

5. Method according to any one of the preceding claims, further comprising the step of forming local grid by at least one generator or battery energy storage system.
